# FASCICULE DE BREVET EUROPEEN

(11) **EP 1 121 268 B1**
(45) Date de publication et mention de la délivrance du brevet: **07.01.2004**
(21) Numéro de dépôt: 99947555.1
(22) Date de dépôt: 12.10.1999
(51) Int. Cl.: B60N 2/46

(54) **DISPOSITIF DE REGLAGE INDEXE DE LA POSITION D'UNE PIECE MOBILE**
VORRICHTUNG ZUM VERSTELLEN DER INDEXIERTEN POSITION EINES MOBILEN TEILES
DEVICE FOR INDEX ADJUSTING A MOBILE PART POSITION

(30) Priorité: 13.10.1998 FR 9812960
(43) Date de publication de la demande: 08.08.2001
(73) Titulaire: LEFEVERE, Marc, 59170 Croix (FR)
(72) Inventeur: LEFEVERE, Marc, 59170 Croix (FR)
(74) Mandataire: Hennion, Jean-Claude
(86) Numéro de dépôt international: PCT/FR1999/002464
(87) Numéro de publication internationale: WO 2000/021784

(56) Documents cités:
- EP-A- 0 024 976
- DE-C- 4 022 840
- FR-A- 2 406 752
- FR-A- 2 704 661
- FR-A- 2 737 263

## Description

L'invention se rapporte à un dispositif de réglage indexé de la position d'une pièce mobile, apte à être déplacée en rotation autour d'un axe par rapport à une pièce support, cette pièce support étant fixe par rapport à cet axe.

Dans un mode de mise en oeuvre de l'invention, la pièce mobile est un accoudoir de siège, par exemple de véhicule automobile.

Ces accoudoirs sont, de manière connue en soi :
- réglables en position angulaire dans un plan vertical par rapport à un plan de référence, généralement horizontal ;
- escamotables dans une position conventionnellement placée selon le plan du dossier du siège.

On connaît déjà dans l'art antérieur, de très nombreuses réalisations de dispositifs de réglage de la position d'accoudoirs de sièges automobiles.

On peut se reporter, à titre d'exemples, aux documents suivants : DE-A-43 30 448, DE-A-42 27 871, DE-40 22 840, DE- 36 11 929, EP-A-010 867, EP-A-018 662, EP-A-061 967, EP-A-104 040, US-A- 4 807 935, FR-A-2 406 752, FR-A-2 636 278, FR-A-2 704 661.

On se réfère ci dessous plus particulièrement au document FR-A-2 737 263, issu de la demanderesse.

Dans une première réalisation, représentée en figures 2 à 9 de ce document FR-A-2 737 263, ce dispositif antérieur permet, partant d'une première position extrême P1 de la pièce mobile et déplaçant celle ci dans un premier sens de rotation S1 :
- dans un premier temps, un mouvement pas à pas de la pièce mobile, jusqu'à ce qu'elle atteigne une position intermédiaire P3 ;
- puis, dans un deuxième temps, au delà de la position intermédiaire P3, un mouvement libre de la pièce mobile, dans le sens de rotation S1 comme dans le sens inverse S2, de sorte que la pièce mobile puisse :
   o soit être ramenée dans sa première position extrême P1, par rotation libre suivant le sens S2, un moyen élastique sollicitant alors éventuellement la pièce mobile dans le sens S2;
   o soit être amenée jusqu'à une deuxième position extrême P2, par rotation libre suivant le sens S1, un moyen élastique sollicitant alors éventuellement la pièce mobile dans le sens S1.

Le mouvement cran par cran ou incrémenté est assuré par un mécanisme de cliquet oscillant pourvu de crans, apte à se trouver dans les états suivant, définis par rapport à la position relative du cliquet et d'une rampe crantée disposée sur une pièce solidaire de la pièce mobile :
- un état d'écartement des crans du cliquet par rapport à ceux de la rampe, la pièce mobile pouvant alors être déplacée librement en rotation dans les deux sens S1 et S2 ;
- plusieurs états d'appui total des crans du cliquet sur les crans de rampe, correspondant chacun à une position donnée de la pièce mobile qui ne peut alors être déplacée que dans le sens S1 ;
- plusieurs états de réglage, dans chacun desquels un seul des crans du cliquet est en contact avec la rampe crantée, un état de réglage séparant chaque état d'appui total lors du mouvement de rotation de la pièce mobile, dans le sens S1, entre les positions P1 et P3.

Un organe élastique sollicite en permanence le cliquet en direction de la rampe crantée.

La pièce supportant la rampe crantée est pourvue d'un chemin de cames permettant l'actionnement d'un moyen de débrayage de l'oscillation du cliquet.

Ce chemin de cames comprend des butées qui, lorsqu'elles viennent en appui contre des butées antagonistes prévues sur le cliquet, permettent :
- le passage du cliquet d'une position d'appui total à la position d'écartement, lors de la rotation de la pièce mobile dans le sens S1 ;
- le retour du cliquet de sa position d'écartement jusqu'à une première position d'appui total, par rotation de la pièce mobile dans le sens S2 et retour à la première position extrême P1.

Un moyen élastique assure le maintien du cliquet en position d'écartement tant que le chemin de cames n'a pas commandé le retour du cliquet en position d'appui total, commande obtenue par rotation suivant S2 de la pièce mobile jusque vers la première position extrême P1.

Dans le dispositif décrit par le document FR-A-2 737 263, de nombreux logements sont ménagés dans la pièce fixe pour la mise en place des moyens élastiques agissant sur le cliquet oscillant, ce qui complique la réalisation d'une telle pièce fixe et n'en permet pas aisément une réalisation compacte.

Par ailleurs, le dispositif décrit dans le document FR-A-2 737 263 comprend de nombreuses pièces à assembler dont les dimensions, configuration et matières entraînent des coûts de fabrication élevés.

L'invention se rapporte à un dispositif permettant d'assurer les fonctions obtenues par le premier mode de réalisation décrit dans le document FR-A-2 737 263, ce dispositif étant plus compact et plus robuste, tout en permettant en outre :
- le démontage de l'accoudoir sans outils, aucune partie saillante ne dépassant du siège lorsque l'accoudoir est démonté du dispositif ;
- l'assemblage d'un nombre plus réduit de pièces par rapport aux réalisations antérieures ;
- le montage d'un accoudoir symétrique sur un dispositif situé à droite ou à gauche d'un siège, sans modification importante de ce dispositif.

A cette fin, l'invention se rapporte, selon un premier aspect, à un dispositif automatique de guidage indexé d'une pièce mobile, guidée autour d'un axe de rotation sur une pièce fixe autour de cet axe, ledit dispositif comprenant :
- un élément cranté, oscillant autour d'un axe d'oscillation sensiblement parallèle à l'axe de rotation;
- une rampe crantée qui définit une pluralité de butées pour l'élément cranté, ces butées étant angulairement disposées autour de l'axe de rotation;
- un chemin de cames pour commander les mouvements d'oscillation de l'élément cranté autour de l'axe d'oscillation, lors de la rotation de la pièce mobile ;
ledit dispositif étant caractérisé en ce qu'il comprend un premier flasque fixe monobloc rigide pourvu de plusieurs surfaces étagées définissant :
- la rampe crantée ;
- le chemin de cames ;
- au moins une portée apte à assurer le guidage en rotation selon l'axe de rotation d'un flasque mobile supportant l'axe d'oscillation de l'élément cranté.

L'invention se rapporte également , selon un deuxième aspect, à un procédé de mise en oeuvre dudit dispositif , le procédé selon l'invention étant défini dans la revendication 20.

D'autres objets et avantages de l'invention apparaîtront au cours de la description suivante de modes de réalisation, description qui va être effectuée en se référant aux dessins annexés dans lesquels :
- la figure 1 est une vue en plan du premier flasque fixe d'un boîtier de commande selon un mode de réalisation de l'invention, ce flasque fixe étant vu sur sa face interne ;
- la figure 2 est une vue analogue à la figure 1, deux pièces étant représentées dans une de leur position de fonctionnement par rapport au premier flasque fixe ;
- la figure 3 est une vue en coupe transversale d'un boîtier selon un mode de réalisation de l'invention ;
- la figure 4 est une vue analogue à la figure 2, le cliquet mobile étant en position dégagée de la rampe crantée du premier flasque fixe ;
- la figure 5 est une vue analogue à la figure 1 d'un deuxième mode de réalisation du premier flasque fixe ;
- la figure 6 est une vue en plan d'un mode de réalisation du second flasque fixe d'un boîtier de commande selon l'invention, ce second flasque fixe étant vu sur sa face interne,

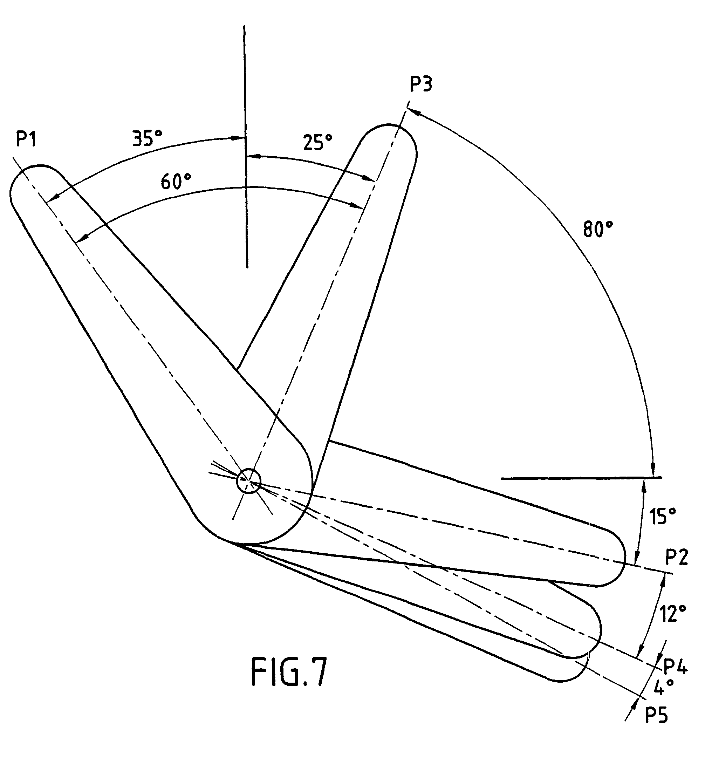

- la figure 7 est une vue schématique de côté d'un accoudoir monté sur un dispositif tel que représenté en figures 1 à 6, l'accoudoir étant figuré dans les positions P1, P2, P3, P4 et P5 définies ci après, les valeurs d'écart angulaire entre ces positions n'étant données qu'à titre indicatif.

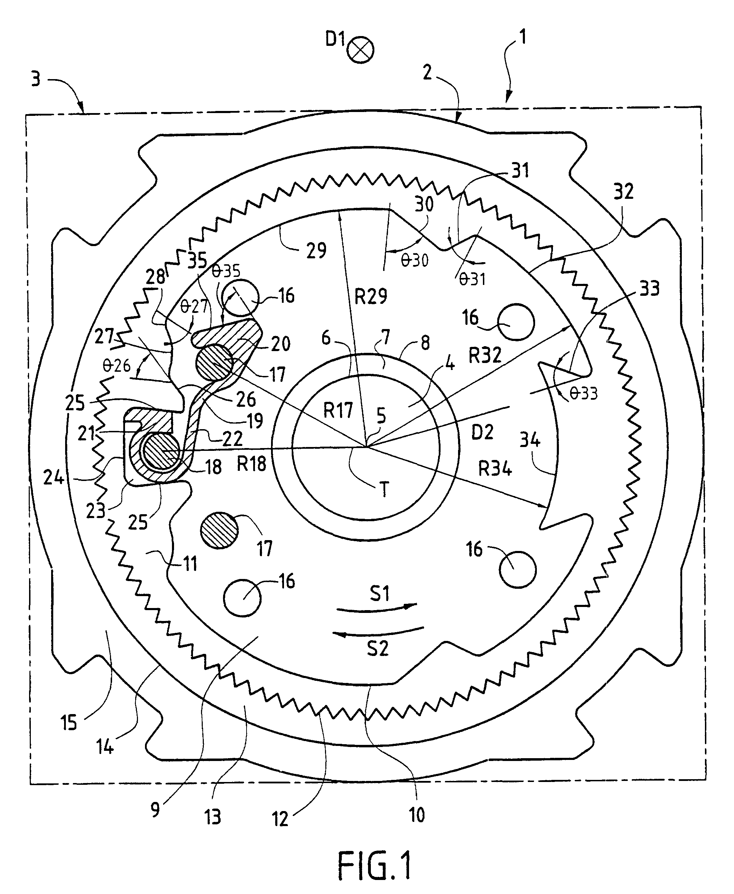

On se rapporte tout d'abord à la figure 1 qui représente, vu en plan, un premier flasque fixe 1 sensiblement rigide et monobloc d'un boîtier de commande selon l'invention.

La figure 1 représente la face interne de ce premier flasque 1 qui peut être élaboré en un matériau choisi, en fonction des applications visées, parmi le groupe comprenant les matériaux polymères, les alliages métalliques tels que par exemple aciers ou alliages d'aluminium.

Dans le mode de réalisation représenté, le pourtour 2 de ce premier flasque fixe 1, tel que vu en figure 1, est sensiblement inscrit dans une enveloppe carrée 3.

Il est entendu toutefois que ce pourtour pourrait avoir une forme différente, de sorte à être inscrit dans une enveloppe ronde, ovale, rectangulaire ou polygonale.

Le premier flasque 1 comporte un trou traversant 4 d'axe 5 sensiblement parallèle à une direction D1 perpendiculaire au plan de la figure 1.

Dans la suite de la description de ce premier flasque 1 :
- le terme transversal " sera employé en référence aux plans parallèles à celui de la figure 1 ;
- les termes " axial ", " longitudinal " seront employés en référence à l'axe 5;
- les termes " radial " " rayon " seront employés en référence aux directions D2 perpendiculaires à l'axe 5 ;
- les termes " intérieur ", " extérieur " seront employés en fonction des distances relatives correspondantes avec l'axe 5.

Dans le mode de réalisation représenté, l'axe 5 est sensiblement placé au centre de l'enveloppe carrée 3.

Dans d'autres modes de réalisation, non représentés, cet axe 5 est décentré par rapport à l'enveloppe dans laquelle est inscrit le pourtour 2 de ce premier flasque fixe 1.

Partant de l'axe 5 et en se déplaçant de façon radiale vers l'extérieur du premier flasque fixe 1, vers son pourtour 2, on rencontre :
- le bord cylindrique 6, d'axe 5, du trou traversant 4 ;
- une première portée 7 formée par une surface annulaire sensiblement transversale limitée vers l'intérieur par le bord cylindrique 6 et, vers l'extérieur, par un bord cylindrique 8 d'axe 5 ;
- une paroi sensiblement transversale formant paroi de fond 9 au premier flasque fixe 1 ;
- un chemin de cames 10 formé par une surface s'étendant sensiblement perpendiculairement à la paroi de fond 9 du premier flasque fixe 1 ;
- une deuxième portée 11 sensiblement transversale limitée vers l'intérieur par le chemin de cames 10 et, vers l'extérieur, par une rampe 12 annulaire d'axe 5 pourvue de crans ;
- une troisième portée 13 sensiblement transversale limitée vers l'intérieur par la rampe crantée 12 et, vers l'extérieur, par une paroi annulaire 14 d'axe 5 ;
- une quatrième portée 15 sensiblement transversale limitée, vers l'intérieur, par la paroi annulaire 14 et, vers l'extérieur, par le pourtour 2.

Partant de la première portée 7 et en allant, en direction radiale, vers le pourtour 2, on rencontre ainsi plusieurs portées 11, 13, 15 étagées pour le premier flasque fixe 1, ces portées 11, 13, 15 étant sensiblement parallèles à la paroi de fond 9.

Dans cette paroi de fond 9 sont prévus, dans le mode de réalisation représenté, quatre trous traversant filetés 16 sensiblement longitudinaux permettant la fixation par vissage du premier flasque 1 sur un support tel que par exemple un dossier de siège automobile, non représenté.

Dans d'autres modes de réalisation, non représentés, cette fixation du premier flasque fixe 1 sur un support est obtenue par un moyen choisi parmi le groupe comprenant le boulonnage, le rivetage, le soudage, le collage ou tout autre moyen équivalent.

La paroi de fond 9 porte, en saillie sensiblement axiale, au moins deux tétons 17, 18 sur lesquels une pièce élastique 19 est clipsée.

La disposition des tétons 17, 18 et de la pièce 19 va être décrite ci dessous en détail, en référence au mode de réalisation de la figure 1.

Cette pièce élastique 19 peut être élaborée en un matériau choisi parmi le groupe comprenant les alliages métalliques, les matériaux polymères.

Les tétons 17, 18 s'étendent sur une hauteur axiale inférieure ou égale à celle du chemin de cames 10.

Dans la réalisation représentée en figure 1, trois tétons 17, 18 permettent le montage de la pièce élastique 19 selon deux configurations symétriques par rapport à un plan T contenant une direction D2 et perpendiculaire à la figure 1.

Seule une des configurations de montage de la pièce élastique 19 est représentée dans les figures.

Dans d'autres réalisations, non représentées, seuls deux tétons 17, 18 sont prévus, une seule disposition de la pièce élastique 19 étant possible.

Dans la réalisation de la figure 1, deux tétons proximaux 17 sont disposés sur un rayon R17 inférieur à celui R18 sur lequel est disposé le troisième téton 18, distal.

La pièce élastique 19 s'étend sur une hauteur axiale inférieure ou égale à celle du chemin de cames 10.

Cette pièce élastique 19 comprend à chacune de ses deux parties extrêmes une forme de crochet plaquée contre une partie de la surface latérale des tétons 17, 18.

Lorsque la pièce élastique 19 est en position non déformée, telle que vue en figure 1, sa première partie extrême 20 est ainsi plaquée contre une partie de la surface latérale d'un téton proximal 17.

L'autre partie extrême 21 de la pièce 19 est quant à elle toujours maintenue plaquée contre une partie de la surface latérale du téton distal 18.

Entre ses deux parties extrêmes épaisses 20, 21, la pièce élastique 19 comporte un segment intermédiaire 22 d'épaisseur croissante de la première partie extrême 20 vers la seconde partie extrême 21.

Une première partie de ce segment intermédiaire 22 est sensiblement concentrique au et disposée à distance du téton distal 18.

La seconde partie de ce segment intermédiaire 22, s'étend entre le téton distal 18 et un téton proximal 17 et présente une courbure à concavité tournée vers l'intérieur.

Le téton distal 18 est placé dans une gorge 23 à ouverture orientée vers l'axe 5 et délimitée par une courbure du chemin de cames 10.

Dans la réalisation représentée, cette gorge 23 présente un profil transversal comprenant :
- une paroi de base 24 sensiblement en arc de cercle d'axe 5 ;
- deux parois latérales 25 sensiblement radiales.

L'ouverture de la gorge 23 est ainsi de dimension plus réduite que sa paroi de base 24.

Dans le mode de réalisation représenté, la première partie du segment intermédiaire 22 de la pièce 19 n'est pas en appui contre la paroi latérale 25 de la gorge 23, la seconde partie extrême 21 de la pièce 19 étant en revanche bloquée par son triple appui contre :
- une paroi latérale 25 de la gorge 23 ;
- la paroi de base 24 de la gorge 23 ;
- la surface latérale du téton distal 18.

La pièce élastique 19 est ainsi maintenue en position sur sa deuxième partie extrême 21.

La première partie extrême 20 n'étant en revanche pas maintenue en position par rapport au téton proximal 17, la pièce élastique 19 peut donc être déformée par élasticité, cette déformation correspondant à une rotation de la pièce élastique 19 selon un axe sensiblement défini par le téton distal 18.

L'intérêt d'une telle déformation sera explicité par la suite.

Le premier flasque fixe 1, sur lequel est rapportée la pièce élastique 19, présente, lorsque vu dans le plan de la figure 1, une symétrie par rapport au plan T défini ci dessus.

Le chemin de cames 10 va maintenant être décrit plus complètement en tenant compte de cette symétrie.

Partant d'une paroi latérale 25 de la gorge 23 et tournant dans le sens des aiguilles d'une montre, on rencontre, sur le chemin de came 10 :
- un congé de raccordement à une première surface plane 26 inclinée d'un angle 826 par rapport à un rayon ;
- une deuxième surface plane 27 inclinée d'un angle θ27 par rapport à un rayon ;
- une troisième surface plane 28 inclinée d'un angle 828 par rapport à un rayon ;
- un premier secteur angulaire 29 en arc de cercle d'axe 5 et de rayon R29 ;
- une quatrième surface plane 30 inclinée d'un angle θ30 par rapport à un rayon ;
- une cinquième surface plane 31 inclinée d'un angle θ31 par rapport à un rayon ;
- un deuxième secteur angulaire 32 en arc de cercle d'axe 5 et de rayon R32 sensiblement égal au rayon R29 défini ci dessus ;
- une sixième surface plane 33 inclinée d'un angle 033 par rapport à un rayon ;
- un troisième secteur angulaire 34 s'étendant sur un rayon R34 inférieur au rayon R29 défini ci dessus.

Dans un mode de réalisation, l'angle θ26 est de l'ordre de 15°, l'angle θ27 de l'ordre de 80°, l'angle θ28 de l'ordre de 45°, l'angle θ30 de l'ordre de 50°, l'angle θ31 de l'ordre de 15°, l'angle θ33 de l'ordre de 45°.

L'homme du métier saura ajuster les valeurs des angles ci dessus pour tenir compte des fonctions du chemin de cames 10 qui seront détaillées par la suite.

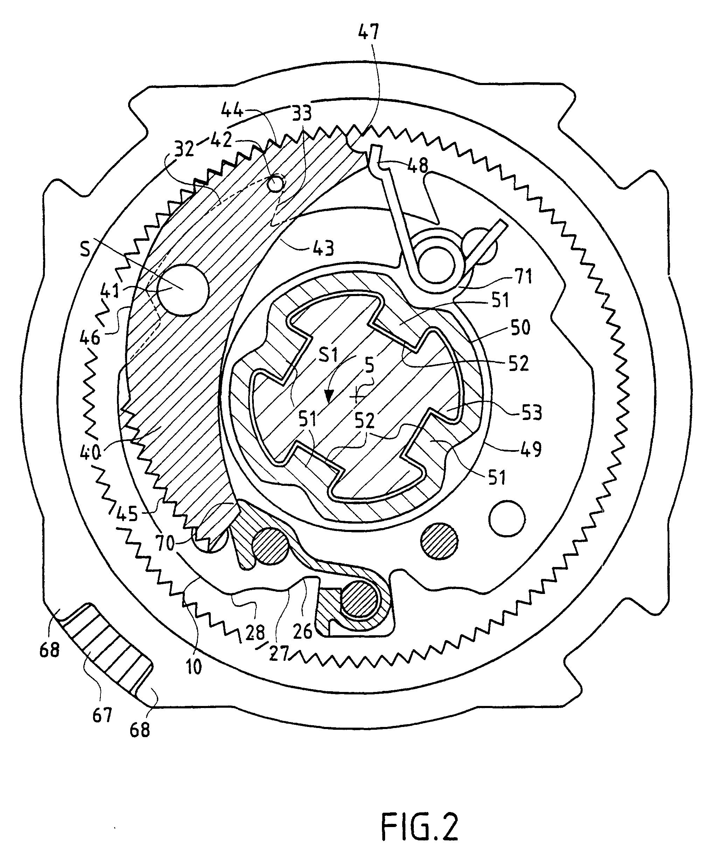

On se rapporte maintenant à la figure 2 qui représente, dans une première position, un cliquet oscillant 40 mobile autour d'un axe d'oscillation 41, cet axe d'oscillation 41 étant apte à être entraîné dans une rotation d'axe 5.

Le cliquet oscillant 40, dans le mode de réalisation représenté, est un élément sensiblement plan, s'étendant transversalement sur le premier flasque fixe 1, et en forme générale de croissant.

L'épaisseur axiale du cliquet 40 est inférieure ou égale à celle de la rampe crantée 12.

Au moins une partie d'une face transversale du cliquet 40 repose sur la deuxième portée 11, et ce tout au long des mouvements possibles pour le cliquet 40.

Le cliquet 40 est pourvu sur une de ses faces transversales d'un téton 42 en saillie sensiblement axiale.

Ainsi qu'il apparaîtra par la suite, ce téton 42 forme doigt de lecture du chemin de cames 10.

Afin de faciliter la lecture des dessins, le flasque mobile supportant le cliquet oscillant 40 n'est pas représenté en figure 2.

Le cliquet oscillant 40 présente un plan de symétrie d'ensemble S, perpendiculaire au plan de la figure 2.

Le pourtour du cliquet 40, sensiblement perpendiculaire au plan de la figure 2 comprend :
- une surface courbe 43 formant un grand bord intérieur,
- sur un grand bord extérieur, deux surfaces crantées 44, 45 séparées par une surface courbe 46 ;
- une butée 47, sur au moins un des deux bords latéraux reliant les bords extérieur et intérieur du cliquet 40.

Les crans des surfaces 44, 45 sont de forme complémentaire à ceux de la rampe 12.

Dans sa position représentée en figure 2, le téton 42 du cliquet oscillant 40 est placé à faible distance des surfaces 32, 33 du chemin de cames 10 et les crans de la première surface crantée 44 du cliquet 40 sont en appui contre ceux de la rampe cranté 12.

Ce maintien en appui est assuré par un moyen élastique 48, tel que par exemple une lame ressort, supporté par une pièce 49 tournant en même temps que le flasque mobile 57 supportant le cliquet 40.

Partant de la position représentée en figure 2, le cliquet oscillant 40 ne peut être entraîné dans sa rotation d'axe 5 que dans un seul sens S1.

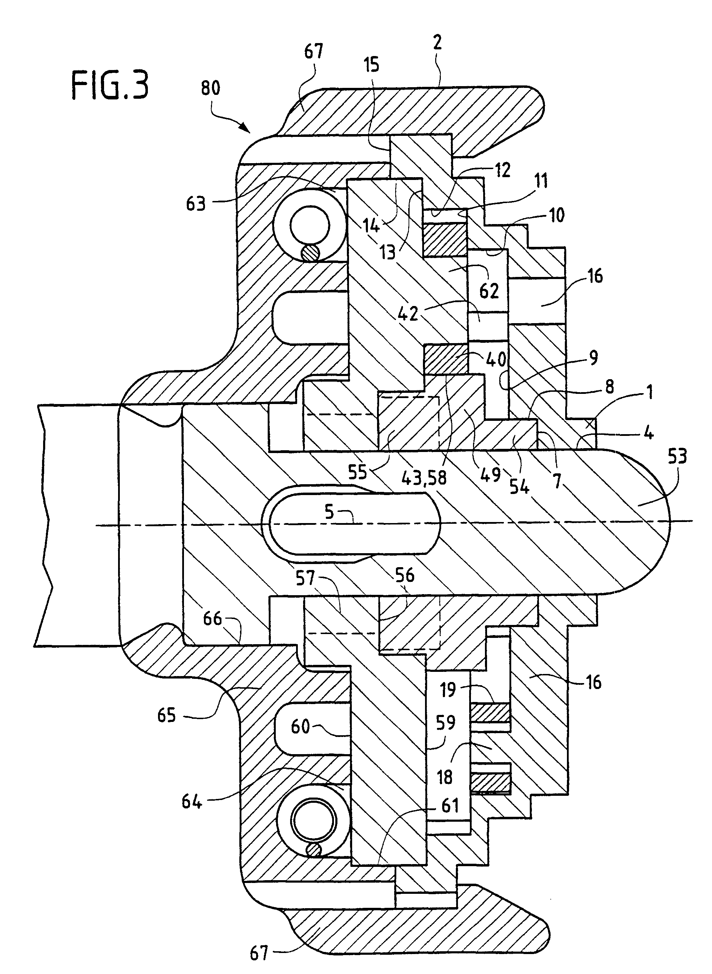

On décrit maintenant le montage d'un boîtier complet en références aux figures 3 et suivantes.

La pièce support 49 est pourvue d'un trou traversant central 50 dont la surface latérale est pourvue, dans un mode de réalisation, de saillies longitudinales 51 destinées à coopérer avec des cannelures 52 correspondantes d'un arbre mobile 53 d'axe 5.

Dans un autre mode de réalisation, la surface latérale du trou traversant central 50 est pourvue de moyens de pincement élastique de l'arbre 53, de sorte à atténuer les cliquetis liés aux jeux fonctionnels du dispositif.

La pièce support 49 comporte :
- une première partie extrême annulaire 54 venant en appui tournant contre la première portée 7 du flasque fixe 1 ;
- une seconde partie extrême 55 venant en appui fixe contre une portée centrale 56 d'axe 5 du flasque mobile 57 ;
- une surface latérale longitudinale 58 restant en tout point au moins légèrement écartée du bord interne 43 du cliquet 40.

Le flasque mobile 57 est une pièce oscillante ou pièce médiane du boîtier.

Dans la réalisation représentée, ce flasque mobile 57 est une pièce pleine pourvue de deux faces transversales 59, 60, un bord longitudinal annulaire 61 d'axe 5 reliant ces deux faces 59, 60.

Le bord latéral externe de la première face transversale 59 est en appui sur la troisième portée 13, le bord longitudinal annulaire 61 étant en appui sur la paroi annulaire 14 du premier flasque fixe 1.

La première face transversale 59 porte, en saillie longitudinale, un téton 62 formant l'axe d'oscillation du cliquet 40.

La seconde face transversale 60 du flasque mobile 57 porte, en saillie longitudinale, un téton 63 se trouvant placé, lorsque le boîtier BO est en position montée, dans une gorge annulaire 64 d'un second flasque fixe 65.

Dans cette gorge annulaire 64 sont disposés des moyens élastiques tels que des ressorts, dont la fonction sera précisée en détail ultérieurement.

Le flasque mobile 57 comporte un trou central traversant d'axe 5 dont le bord annulaire est pourvu de saillies longitudinales destinées à être en appui dans les cannelures 52 de l'arbre 53.

Le second flasque fixe 65 est pourvu d'un trou traversant 66 permettant le passage de l'arbre 53.

Dans la réalisation représentée, le second flasque fixe 65 est une contre pièce clipsée sur le premier flasque fixe 1 par quatre pattes élastiques 67, le second flasque fixe 65 étant réalisé en matériau polymère, injecté ou moulé.

Des butées 68 prévues sur le pourtour 2 du flasque fixe 1 permettent d'éviter un déplacement relatif des deux flasques fixes 1, 65, notamment en rotation autour de l'axe 5.

D'autres moyens d'assemblage des deux flasques fixes 1, 65 peuvent être prévus en plus ou en lieu et place des pattes 67, notamment lorsque le second flasque fixe 65 est métallique.

Le second flasque fixe 65 est pourvu d'une portée d'arrêt en translation et de guidage en rotation du flasque mobile 57.

Le fonctionnement d'un boîtier BO va maintenant être décrit, partant de la position représentée en figure 2 pour le cliquet 40.

Cette position correspond à celle P1 pour laquelle l'arbre 53 ne peut tourner que dans un seul sens S1.

Une action manuelle sur l'arbre 53, dans le sens de rotation S1 conduit à l'entraînement en rotation du flasque mobile 57 et, par conséquent à la rotation d'axe 5 :
o de la pièce support 49 en appui fixe par un ergot sur la portée 56 ;
o du cliquet oscillant 40 monté sur le téton 62.

Lors de cette rotation, les crans de la première surface crantée 45 du cliquet oscillant 40 sont ramenés en direction de ceux de la rampe crantée 12, toujours par l'action du moyen élastique 48.

Partant de la position P1 représentée en figure 2, une rotation de l'arbre 53 va donc conduire à un mouvement cran par cran du cliquet oscillant 40, tant que le téton 42 parcourt le deuxième secteur angulaire 32.

Le passage d'un cran à un autre, par rotation suivant S1 est associé à une oscillation du cliquet 40, un mouvement dans le sens de rotation inverse S2 étant impossible, pour chaque position incrémentée obtenue.

A titre d'exemple, un réglage incrémenté sur 40° peut être obtenu avec un pas de l'ordre de 4 à 5°.

Lorsque le téton 42 atteint la surface 31 du chemin de cames 10, le cliquet 40 est entraîné en rotation autour de l'axe défini par le téton 62 de sorte que la première surface crantée 44 du cliquet 40 est écartée de la rampe crantée 12.

Le maintien dans cette position écartée est obtenu par le mouvement de la butée 47 du cliquet 40 sur le moyen élastique 48.

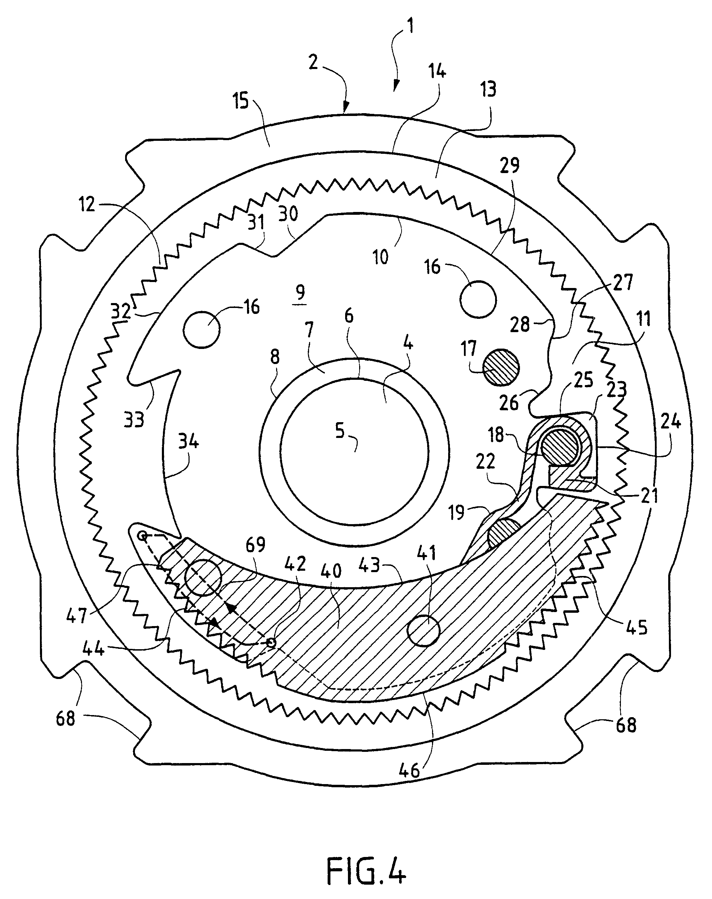

Le cliquet 40 est alors disposé de la manière représentée en figure 4 et l'arbre 53 est placé dans une position P3.

Il est alors possible de faire tourner librement l'arbre 53 dans les deux sens S1 ou S2, pour :
- soit revenir à la position P1 définie précédemment, le téton 42 du cliquet 40 suivant une première trajectoire telle que par exemple celle référencée 69 sur la figure 4. Dans ce cas, le contact du téton 42 avec la sixième surface 33 du chemin de cames 10 provoque le retour du cliquet 40 dans sa position de la figure 2 ;
- soit aller jusque vers une position P2 dans laquelle la rotation suivant S1 reste possible, la rotation suivant S2 étant inhibée.

Cette position P2 est atteinte lorsque le téton 42 rencontre la surface 35 inclinée limitant la première partie extrême 20 de la pièce 19.

Du fait de l'angle θ35 d'inclinaison de cette surface 35, mesuré par rapport à un rayon, et de la longueur de cette surface 35, le cliquet 40 est en effet forcé de revenir dans une position d'appui de sa première surface crantée 44 contre la rampe crantée 12.

De sorte qu'un blocage en rotation de l'arbre 53 est obtenu, pour les mêmes raisons que lors du mouvement cran par cran entre les positions P1 et P3.

Si, partant de cette position P2 l'on exerce une action de rotation de l'arbre 53 selon S1, le téton 42 du cliquet 40 va rencontrer la deuxième surface 27, ce qui va avoir pour effet de placer le cliquet 40 en position écartée de la rampe 12, de manière analogue à ce qui a été décrit auparavant lors du passage du téton 42 sur la surface 31.

L'arbre 53 est alors en position P4.

Partant de cette position P4, il est possible :
- de ramener l'arbre 53 dans la position P1, par rotation libre dans le sens S2 ;
- d'amener l'arbre 53 dans une position extrême P5 par rotation libre, de faible amplitude, dans le sens S1.

Cette position P5 correspond à l'ensemble des caractères suivants assurant une fin de course, y compris en cas d'effort important dans le sens d'une rotation suivant S1 : contact entre le téton 42 du cliquet 40 et la première surface 26 du chemin de cames 10 qui permet l'appui de la seconde surface crantée 45 du cliquet 40 contre la rampe crantée 12.

En variante de réalisation, le chemin de cames 10 est pourvu, en fin de première surface 26, d'une butée fin de course.

Partant de la position P5 et actionnant l'arbre dans le sens S2, le retour dans la position P4 conduit à la mise à distance des surfaces crantées du cliquet 40 et de la rampe crantée 12, cette mise à distance étant maintenue par le moyen élastique 48.

Le déverrouillage depuis la position P2 est par exemple obtenu, dans le cas d'une application à un accoudoir automobile, par débrayage du cliquet oscillant 40 du fait d'une poussée de l'accoudoir vers l'arrière, la position P2 correspondant sensiblement à l'alignement de l'accoudoir avec le dossier du siège.

Au total, le cliquet peut être placé dans trois états stables différents :
- un premier état, dans lequel la première surface crantée 44 du cliquet 40 est en appui sur la rampe crantée 12 du premier flasque fixe 1. Ce premier état est celui des positions stables comprises entre P1 incluse et P3 exclue, et correspond également à la position P2 ;
- un deuxième état, dans lequel le cliquet n'est pas en contact avec la rampe crantée 12, cette mise à distance étant conservée par le blocage réversible de la butée 47 du cliquet 40 contre une partie du profil du moyen élastique 48. Ce deuxième état correspond aux positions P3 et P4 de l'arbre 53 ;
- un troisième état, dans lequel la seconde surface crantée 45 du cliquet 40 est en appui contre la rampe crantée 12 du premier flasque fixe 1. Ce troisième état correspond à la position extrême P5.

Entre les postions P1 et P3, soit par exemple sur 40° environ , un réglage de l'angle de rotation de l'arbre 53 est possible, cran par cran, le passage d'un cran à un autre étant obtenu par petit débattement du cliquet 40.

Le passage d'un cran à un autre peut correspondre par exemple à un angle de 4 à 5° environ.

La course complète de P1 à P5 peut correspondre par exemple à un angle de l'ordre de 140° environ, les positions P4 et P5 étant distantes de quelques degrés.

Dans le mode de réalisation représenté, la rampe crantée 12 est pourvue de crans sensiblement identiques sur toute son étendue, et le chemin de cames 10 comprend deux demi-chemins de cames symétriques par rapport au plan T, un seul demi-chemin de came étant employé.

Dans d'autres modes de réalisation, non représentés, les crans disposés sur le demi-cercle de la rampe crantée 12 correspondant à un demi-chemin de came sont différents de ceux disposés sur l'autre demi-cercle, de sorte à permettre par exemple un montage du dispositif avec deux valeurs d'écart angulaire entre les crans, suivant le demi-chemin de came utilisé.

Dans de telles réalisations, lorsque le cliquet 40 possède deux surfaces crantées, la seconde surface crantée est bien évidemment adaptée à venir en appui contre la rampe crantée 12, le cas échéant, lorsque la position P5 est atteinte.

Dans d'autres modes encore de réalisation, non représentés, les crans ne sont présents sur la rampe 12 que dans les zones correspondant aux positions P1 à P3, P2 et P5.

Dans d'autres modes de réalisation, non représentés, les deux demi-chemins de cames ne sont pas symétriques, ou bien encore le premier flasque fixe ne comporte qu'un seul chemin de cames, celui ci s'étendant sur un secteur angulaire supérieur à celui d'un demi-chemin de came tel que décrit.

Dans d'autres modes de réalisation, une pièce en matériau polymère rapportée sur le premier flasque fixe 1 forme au moins une partie du chemin de cames 10.

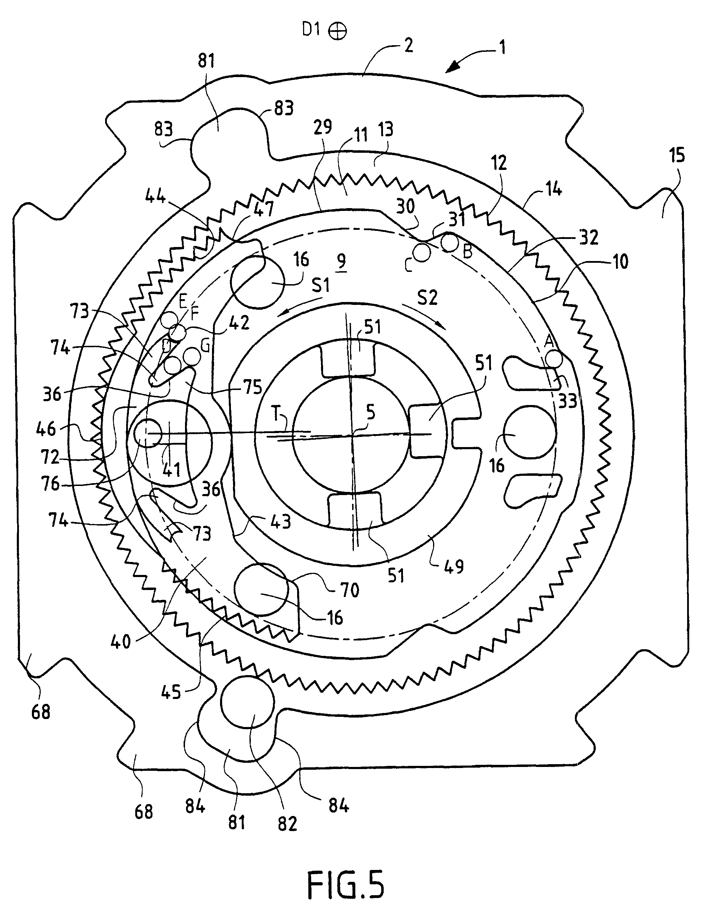

On se rapporte maintenant à la figure 5 qui illustre une variante de réalisation du premier flasque fixe 1.

Dans cette figure 5, les éléments analogues à ceux précédemment décrits portent les mêmes références numériques et ne seront pas décrits à nouveau.

Afin de simplification, sur la figure 5 :
- le moyen élastique 48 n'est pas représenté ;
- une pièce élastique 72 est représentée en traits continus, bien qu'elle soit placée au dessous du cliquet oscillant 40 dont le téton 42 est placé en position référencée F.

Les formes et fonctions de cette pièce élastique 72 seront présentées en détail par la suite.

Sur la figure 5, les références A, B, C, D, E et F correspondent aux positions du téton 42 du cliquet 40 par rapport au chemin de cames 10.

La position A est analogue à celle décrite auparavant en référence à la figure 2 et est associée à la position P1.

La position C correspond à la position P3 de l'arbre 53.

Lorsque le téton 42 parcourt le chemin de cames depuis A vers B (deuxième secteur angulaire 32), le cliquet 40 parcourt les dents de la rampe crantée 12 du premier flasque 1, ce qui permet un réglage incrémenté de la position angulaire de l'arbre 53.

Le passage du téton 42 de B vers C entraîne la mise à distance des dents du cliquet 40 par rapport à la rampe crantée 12, et l'arbre 53 est alors libre de rotation dans le sens S1 ou S2, de manière analogue à ce qui à été décrit précédemment en référence aux figures 1 à 4.

Partant de la position P3 (point C), une rotation de l'arbre 53 dans le sens S1 conduit au contact en D entre le téton 42 et une pente 36 de la pièce élastique 72, le téton 42 passant ensuite au fond d'une gorge 74. Dans cette position, les crans du cliquet 40 ne sont pas en contact avec la rampe crantée 12 et le moyen élastique 48 exerce une pression sur le cliquet 40.

Cette pièce élastique 72 forme came flexible et peut être réalisée en un matériau choisi parmi le groupe comprenant les alliages métalliques, les polymères.

Si, partant de cette position en fond de gorge 74, une rotation dans le sens S2 est appliquée à l'arbre 53, la flexibilité du bras 73 de la pièce élastique 72 permet au téton 42 du cliquet 40 de venir en position E, dans laquelle la première surface crantée 44 du cliquet 40 est en appui dans la rampe crantée 12.

L'arbre 53 est alors placé en position P2.

Partant de la position P2 (point E), une rotation de l'arbre 53 dans le sens S1 conduit au déplacement du téton 42 par le dégagement du secteur cranté 44, de la position E vers la position F puis G, correspondant à la position P5 pour l'arbre 53.

La rotation dans le sens S1 au delà de cette position P5 est inhibée par un mécanisme analogue à celui décrit précédemment en référence aux figures 1 à 4 : contact entre la deuxième surface crantée 45 du cliquet 40 et la rampe crantée 12.

Dans la réalisation représentée en figure 5, la pièce élastique 72 formant came flexible est :
- rapportée sur le premier flasque fixe 1 par montage sur un plot 76 saillant de la paroi de fond 9 ;
- pourvue d'un plan de symétrie confondu avec le plan de symétrie d'ensemble T du premier flasque fixe 1.

Dans d'autres modes de réalisation, non représentés, la pièce 72 n'est pas symétrique par rapport au plan T et/ou le premier flasque fixe 1 est dépourvu d'un tel plan de symétrie T.

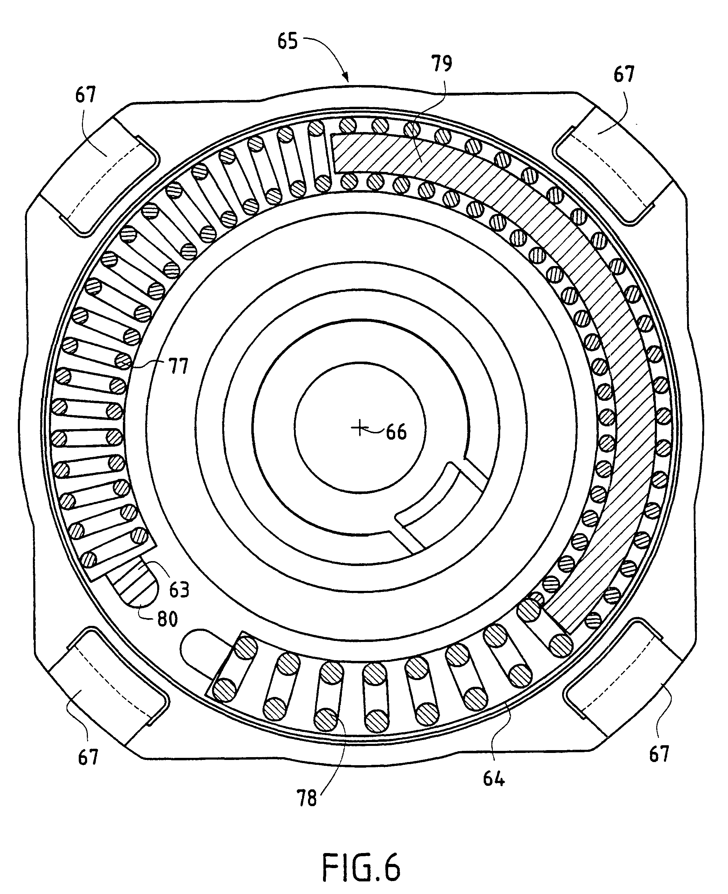

On décrit maintenant en référence à la figure 6 les moyens élastiques contenus dans la gorge 64 du second flasque fixe 65.

Ainsi qu'il a été dit auparavant, un plot ou téton 63 du flasque mobile 57 est mobile dans cette gorge 64 lors de la rotation de l'arbre 53.

Lors de son mouvement, le téton 63 va comprimer des moyens élastiques placés dans la gorge 64.

Dans la réalisation représentée, ces moyens élastiques comprennent un premier et un deuxième ressorts hélicoïdaux de compression 77, 78 mis en série, c'est à dire bout à bout, de sorte à être en appui au moins indirect par une de leur extrémité.

Le premier ressort 77 s'étend au repos sur un secteur angulaire supérieur à celui sur lequel s'étend, au repos, le deuxième ressort 78.

Le premier ressort 77, de raideur inférieure à celle du deuxième ressort 78, comprend une tige coudée 79 logée dans ses spires.

Cette tige 79 est d'un diamètre tel qu'elle ne peut entrer dans les spires du deuxième ressort 78.

Le téton 63, dans la position P1 de l'arbre 53 est placé dans un logement 80 de la gorge 64.

Sous l'effet d'une rotation de l'arbre 53 dans le sens S1, une compression du premier ressort 77 est obtenue, jusqu'à ce que les spires du premier ressort 77 soient presque contiguës, cet état correspondant sensiblement à une longueur comprimée de premier ressort égale à celle de la tige 79.

Si, arrivé à cet état de compression du premier ressort 77, une rotation de l'arbre 53 dans le sens S1 est poursuivie, la tige 79 va tendre à comprimer le deuxième ressort 78, de forte raideur.

De sorte que le couple appliqué sur l'arbre 53 ne conduit pas à une détérioration du premier ressort 77.

Les ressorts 77, 78 et la gorge 64 sont disposés de manière telle que le mouvement de l'arbre 53 de la position P1 à la position P5 se fait à l'encontre d'une force de rappel croissante, avec force maximum en position P5.

Un boîtier de commande BO tel que décrit ci-dessus peut être employé notamment pour le réglage d'accoudoirs de sièges, par exemple de sièges automobiles.

Dans cette application :
- le premier ressort 77 peut être disposé pour opposer une première résistance élastique au déplacement de l'accoudoir d'une position extrême basse (P1) notamment voisine de l'horizontale, vers une position haute et l'aide au retour vers la position P1;
- le second ressort 78 peut être, quant à lui, disposé pour opposer une résistance élastique supplémentaire à la rotation suivant S1 de sorte à :
   o former un repère révélant l'imminence du verrouillage de l'accoudoir en position haute (P4) ;
   o opposer une résistance notable au déplacement de cet accoudoir vers la position extrême P5 de déverrouillage.

Dans le mode de réalisation représenté en figure 5, le premier flasque 1 est pourvu de deux logements 81 dans chacun desquels peut être placé un moyen d'immobilisation en rotation 82 de type inertiel.

Dans l'application aux accoudoirs automobile, cette immobilisation par les moyens 82 peut correspondre à la position relevée de l'accoudoir.

Les moyens 82 ont dans ce cas pour fonction d'interdire le retour de l'accoudoir en position horizontale en cas de brusque décélération du véhicule.

Dans le mode de réalisation représenté, les logements 80, 81 sont pourvus de parois latérales 83, 84 sur lesquelles sont prévues de butées plastiques (non représentées) formant pistes de guidage d'un organe roulant 82 telle qu'une bille, ces butées plastiques permettant d'assurer une symétrie des pistes de guidage par rapport à un axe de symétrie disposé le long du dossier de siège, soit 20 à 25° par rapport à la verticale.

La face périphérique cylindrique du flasque mobile 57 est pourvue d'au moins une cavité disposée pour, dans une orientation déterminée du flasque mobile 57, interdire sa rotation.

Le boîtier tel que décrit ci dessus s'avère d'une grande robustesse et d'une grande compacité.

## Revendications

1. Dispositif automatique de guidage indexé d'une pièce mobile (53), guidée autour d'un axe de rotation (5) sur une pièce fixe (1) autour de cet axe de rotation (5), ledit dispositif comprenant :
- un élément cranté (40), oscillant autour d'un axe d'oscillation (41) sensiblement parallèle à l'axe de rotation (5) ;
- une rampe crantée (12) qui définit une pluralité de butées pour l'élément cranté (40), ces butées étant angulairement disposées autour de l'axe de rotation (5) ;
- un chemin de cames (10) pour commander les mouvements d'oscillation de l'élément cranté (40) autour de l'axe d'oscillation (41) lors de la rotation de la pièce mobile ;
ledit dispositif étant **caractérisé en ce qu'**il comprend un premier flasque fixe monobloc rigide (1) pourvu de plusieurs surfaces étagées définissant :
- la rampe crantée (12) ;
- le chemin de cames (10) ;
- au moins une portée (13, 14) apte à assurer le guidage en rotation selon l'axe de rotation (5) d'un flasque mobile (57) supportant l'axe d'oscillation (41) de l'élément cranté (40).

2. Dispositif selon la revendication 1, **caractérisé en ce que** le premier flasque fixe (1) comprend un trou traversant (4) d'axe (5) permettant le passage d'au moins une partie de l'arbre (53) de la pièce mobile, le premier flasque fixe (1) comprenant en outre, partant de l'axe (5) et en se déplaçant de façon radiale vers le pourtour (2) du flasque (1) :
- une première portée (7) formée par une surface annulaire sensiblement transversale limitée vers l'intérieur par le bord cylindrique (6) du trou (4) et, vers l'extérieur, par un bord cylindrique (8) d'axe (5) ;
- une paroi sensiblement transversale formant paroi de fond (9) au premier flasque fixe (1) ;
- un chemin de cames (10) formé par une surface s'étendant sensiblement perpendiculairement à la paroi de fond (9);
- une deuxième portée (11) sensiblement transversale limitée vers l'intérieur par le chemin de cames (10) et, vers l'extérieur, par une rampe (12) annulaire d'axe (5) pourvue de crans ;
- une troisième portée (13) sensiblement transversale limitée vers l'intérieur par la rampe crantée (12) et, vers l'extérieur, par une paroi annulaire (14) d'axe (5) ;
- une quatrième portée (15) sensiblement transversale limitée, vers l'intérieur, par la paroi annulaire (14) et, vers l'extérieur, par le pourtour (2).

3. Dispositif selon la revendication 2, **caractérisé en ce que** le chemin de cames (10) comprend deux demi-chemin de came, sensiblement symétriques par rapport à un plan (T) perpendiculaire à la paroi de fond (9).

4. Dispositif selon l'une quelconque des revendications 1 à 3, **caractérisé en ce qu'**il comporte en outre une pièce élastique (19, 72) montée sur le premier flasque fixe (1), ladite pièce élastique comprenant une surface inclinée (36, 37) apte à commander un mouvement d'oscillation de l'élément cranté de sorte à interdire une rotation de la pièce mobile (53) selon un sens de rotation.

5. Dispositif selon l'une quelconque des revendications 1 à 4, **caractérisé en ce qu'**il comprend ledit flasque mobile (57) sous la forme d'une pièce en forme générale de disque, pourvue :
- d'un trou traversant permettant le passage de l'arbre (53) de la pièce mobile ;
- de moyens permettant le blocage en rotation de ce flasque mobile (57) par rapport au dit arbre tournant (53),
ce flasque mobile (57) étant pourvu en outre, sur une première face transversale (59), d'un téton (62) formant l'axe d'oscillation (41) de l'élément cranté (40).

6. Dispositif selon la revendication 5, **caractérisé en ce que** l'élément cranté (40) ou cliquet oscillant est une pièce sensiblement plane pourvue :
- d'un trou d'axe permettant son montage sur le téton (62) du flasque mobile (57) ;
- d'un téton (42), en saillie sur l'une de ses faces transversales, ce téton (42) formant doigt de lecture du chemin de cames (10) lors de la rotation du flasque mobile (57) par rapport au premier flasque fixe (1 ) ;
- de crans sur au moins une première surface latérale (44), ces crans étant de forme sensiblement complémentaire de ceux de la rampe crantée (12) du premier flasque fixe (1).

7. Dispositif selon la revendication 6, **caractérisé en ce que** l'élément cranté (40) est pourvu d'un plan de symétrie d'ensemble (S), deux surfaces crantées (44, 45) étant disposées sur sa surface latérale externe.

8. Dispositif selon l'une quelconque des revendications 1 à 7, **caractérisé en ce qu'**il comporte en outre une pièce support (49) d'axe (5), mécaniquement reliée au flasque mobile (57) de sorte à être entraînée en rotation avec lui lors du mouvement de l'arbre (53), cette pièce (49) supportant un moyen de rappel élastique (48) de l'élément cranté (40).

9. Dispositif selon la revendication 8, **caractérisé en ce que** le moyen de rappel élastique (48) est une lame flexible pourvue d'une butée, l'élément cranté étant pourvu d'une butée (47) de forme complémentaire, de sorte que cet élément cranté (40) puisse se trouver dans les états stables suivants :
- un premier état, dans lequel la première surface crantée (44) de l'élément cranté (40) est en appui sur la rampe crantée (12) du premier flasque fixe (1) ;
- un deuxième état, dans lequel l'élément cranté (40) n'est pas en contact avec la rampe crantée (12), cette mise à distance étant conservée par le blocage réversible de la butée (47) contre le profil complémentaire du moyen élastique (48) ;
- un troisième état, dans lequel la seconde surface crantée (45) de l'élément cranté (40) est en appui contre la rampe crantée (12) du premier flasque fixe (1 ).

10. Dispositif selon la revendication 9, **caractérisé en ce qu'**il comprend un second flasque fixe (65) pourvu d'un trou traversant permettant le passage de l'axe (53) de la pièce mobile, ce second flasque (65) étant apte à être solidarisé au premier flasque fixe (1), de sorte former un boîtier (BO) dans lequel se trouve logé l'ensemble tournant formé par :
- le flasque mobile (57) ;
- l'élément cranté (40) oscillant sur le flasque mobile (57) par rapport à l'axe (41 ) ;
- la pièce (49) support de moyen de rappel élastique (48).

11. Dispositif selon la revendication 10, **caractérisé en ce que** le second flasque fixe (65) est clipsé sur le premier flasque fixe (1), de sorte à assurer la rétention dudit ensemble tournant.

12. Dispositif selon la revendication 10 ou 11, **caractérisé en ce que** les portées du premier flasque fixe (1) assurent, après solidarisation des premiers et second flasques fixes (1, 65) :
- pour la première portée (7), le guidage en rotation d'axe (5) et le blocage en translation de la pièce support (49) ;
- pour la deuxième portée (11), l'appui d'au moins une partie d'une surface transversale de l'élément cranté (40) ;
- pour la troisième portée (13), le guidage en rotation d'axe (5) et le blocage en translation du flasque mobile (57).

13. Dispositif selon l'une quelconque des revendications 10 à 12, **caractérisé en ce que** le flasque mobile (57) comprend, en saillie sur sa face transversale placée en regard du second flasque fixe (65), un téton (63) venant se loger dans une portée de maintien, ménagée dans le second flasque fixe (65), ce téton (63) formant butée d'actionnement d'au moins un organe élastique contenu dans la dite portée.

14. Dispositif selon la revendication 13, **caractérisé en ce que** la portée de maintien est une gorge annulaire (64) d'axe (5).

15. Dispositif selon la revendication 13 ou 14, **caractérisé en ce que** la portée de maintien contient deux ressorts, le second ressort (78) étant de raideur supérieure au premier ressort (77), au moins un des ressorts coopérant avec un moyen (79) apte à limiter la déformation du premier ressort (77) à une valeur limite prédéterminée, de sorte que la rotation du flasque mobile (57) s'effectue à l'encontre de ces ressorts (77, 78) pour :
- sur un premier secteur angulaire comprimer le premier ressort (77) jusqu'à ladite valeur limite ;
- puis, sur un second secteur angulaire, comprimer uniquement le second ressort (78).

16. Dispositif selon la revendication 15, **caractérisé en ce que** les ressorts (77,78) sont disposés en appui au moins indirect l'un avec l'autre, sur une de leur extrémité.

17. Dispositif selon la revendication 15 ou 16, **caractérisé en ce que** le moyen (79) apte à limiter la déformation du premier ressort (77) est un élément arqué dont la longueur développée est sensiblement égale à celle du premier ressort (77) comprimé.

18. Dispositif selon l'une quelconque des revendications 10 à 17, **caractérisé en ce que**, entre le premier flasque fixe (1) et le flasque mobile (57) est interposé un moyen (82) d'immobilisation en rotation de type inertiel.

19. Dispositif selon la revendication 18, **caractérisé en ce que** le premier flasque fixe (1) présente au moins une piste de guidage (83, 84) d'un organe roulant (82), la face latérale du flasque mobile (57) comportant au moins une cavité disposée pour, dans une orientation relative déterminée du flasque mobile (57) par rapport au premier flasque fixe (1), accueillir partiellement l'organe roulant (82) afin qu'il constitue en cette position un obstacle à la rotation du flasque mobile (57).

20. Procédé de mise en oeuvre d'un dispositif tel que présenté dans les revendications précédentes, **caractérisé en ce qu'**il comprend une étape dans laquelle l'arbre (53) est maintenu fixe dans une première position (P1), seule une rotation dans un premier sens (S1) étant possible à partir de cette position (P1), l'élément cranté (40) étant dans un premier état d'appui de ses crans contre la rampe crantée (12) du premier flasque fixe (1 ).

21. Procédé selon la revendication 20, **caractérisé en ce qu'**il comprend au moins un mouvement de l'arbre (53) dans un premier sens de rotation (S1), depuis la première position (P1) jusqu'à une position intermédiaire prédéfinie (P3) contenue dans un premier secteur angulaire, position intermédiaire (P3) dans laquelle l'élément cranté (40) est en appui contre les crans de la rampe crantée (12) de sorte que le mouvement de l'arbre (53) dans le deuxième sens de rotation (S2) est inhibé.

22. Procédé selon la revendication 21, **caractérisé en ce qu'**il comprend au moins un mouvement de l'arbre (53) dans le premier sens (S1), depuis une position quelconque du premier secteur angulaire vers ladite position prédéfinie (P3) dans laquelle :
- l'élément cranté (40) est mis à distance de la rampe crantée (12) et est maintenu à distance par appui de la butée (47) contre une butée complémentaire ménagée sur la pièce élastique (48) ;
- le téton (42) est placé à distance du chemin de cames (10)
le mouvement de rotation de l'arbre (53) dans les deux sens de rotation (S1, S2) étant libre à partir de cette position (P3).

23. Procédé selon la revendication 22, **caractérisé en ce qu'**il comprend au moins un mouvement de rotation de l'arbre (53) dans le premier sens (S1) depuis ladite position prédéfinie (P3) vers une deuxième position (P2) dans laquelle l'élément cranté (40) est en appui contre la rampe crantée (12).

24. Procédé selon la revendication 23, **caractérisé en ce qu'**il comprend au moins un mouvement de rotation de l'arbre (53) dans le premier sens (S1) depuis la deuxième position (P2) vers une troisième position (P4) dans laquelle :
- l'élément cranté (40) est à distance de la rampe cranté (12), et maintenu à distance par le contact entre la butée (47) et la butée complémentaire de l'organe élastique (48) ;
- le téton (42) de l'élément cranté (40) est en appui contre le chemin de cames (10).

25. Procédé selon la revendication 24, **caractérisé en ce qu'**il comprend un moins un mouvement de rotation de l'arbre (53) dans le premier sens (S1) depuis la troisième position (P4) jusqu'à une position de blocage (P5) dans laquelle un appui intervient entre la seconde surface crantée (45) de l'élément cranté (40) et la rampe crantée (12).

26. Application d'un procédé tel que présenté dans les revendications 20 à 25 au réglage manuel d'un accoudoir de sièges, tel que notamment un siège de véhicule automobile.

27. Application selon la revendication 26 dans laquelle :
- la première position (P1) correspond à une situation sensiblement horizontale de l'accoudoir ;
- les positions réglables crans par crans par rotation de l'arbre (53) dans le premier secteur angulaire limité par ladite première position (P1) incluse et ladite position prédéfinie (P3) exclue, correspondent à une pluralité de positions inclinées de l'accoudoir par rapport à l'horizontale, l'inhibition du mouvement dans le sens (S2) permettant un appui sur cet accoudoir dans de telles positions ;
- la deuxième position (P2) correspond à une situation sensiblement verticale de l'accoudoir ;
- la troisième position (P4) et la position de blocage (P5) correspondent à des situations inclinées d'un angle légèrement supérieur à 90° par rapport à la position (P1).

## Patentansprüche

1. Automatische Vorrichtung zum indexierten Führen eines beweglichen Teils (53), das um eine Rotationsachse (5) auf einem feststehenden Teil (1) geführt wird, um diese Rotationsachse (5) herum, wobei die Vorrichtung umfasst:
- ein Einrast-Element (40), das um eine Schwingachse (41) im Wesentlichen parallel zur Rotationsachse (5) mechanisch hin und her bewegt wird;
- eine Einrast-Rampe (12), die eine Vielzahl von Anschlägen für das Einrast-Element (40) definiert, wobei diese Anschläge angulär um die Rotationsachse (5) herum angeordnet sind; und
- eine Nocken-Bahn (10) zur Steuerung der mechanischen Hin- und Herbewegungen des Einrast-Elements (40) um die Schwingachse (41) herum beim Drehen des beweglichen Teils;
wobei die Vorrichtung **dadurch gekennzeichnet ist, dass** sie einen ersten feststehenden starren Monoblock-Flansch (1) umfasst, der mit mehreren abgestuften Oberflächen ausgestattet ist, die definieren;
- die Einrast-Rampe (12);
- die Nocken-Bahn (10);
- mindestens eine Auflagefläche (13, 14), welche die Führung eines beweglichen Flansches (57), der die Schwingachse (41) des Einrast-Elements (40) trägt, bei der Rotation um die Rotationsachse (5) herum gewährleisten kann.

2. Vorrichtung nach Anspruch 1, **dadurch gekennzeichnet, dass** der erste feststehende Flansch (1) ein durchgehendes Loch (4) für die Achse (5) aufweist, welches das Einführen mindestens eines Teils der Welle (53) des beweglichen Teils erlaubt, wobei der erste feststehende Flansch (1) außerdem umfasst, ausgehend von der Achse (5) und bei seiner radialen Verschiebung in Richtung auf den Umfang (2) des Flansches (1):
- eine erste Auflagefläche (7), die durch eine ringförmige, im Wesentlichen transversale Oberfläche gebildet wird, die durch den zylindrischen Rand (6) des Loches (4) nach innen und durch einen zylindrischen Rand (8) der Achse (5) nach außen begrenzt ist;
- eine im Wesentlichen transversale Wand, welche die untere Wand (9) des ersten feststehenden Flansches (1) bildet;
- eine Nocken-Bahn (10), die durch eine Oberfläche gebildet wird, die sich im Wesentlichen senkrecht zur unteren Wand (9) erstreckt;
- eine im Wesentlichen transversale zweite Auflagefläche (11), die durch die Nocken-Bahn (10) nach innen und durch eine ringförmige Rampe (12) der Achse (5), die mit Einkerbungen (Zähnen) ausgestattet ist, nach außen begrenzt ist;
- eine im Wesentlichen transversale dritte Auflagefläche (13), die durch die Einrast-Rampe (12) nach innen und durch eine ringförmige Wand (14) der Achse (5) nach außen begrenzt ist;
- eine im Wesentlichen transversale vierte Auflagefläche (15), die durch die ringförmige Wand (14) nach innen und durch den Umfang (2) nach außen begrenzt ist.

3. Vorrichtung nach Anspruch 2, **dadurch gekennzeichnet, dass** die Nokken-Bahn (10) zwei Nocken-Halbstrecken umfasst, die im Wesentlichen symmetrisch sind zu einer Ebene (T) senkrecht zur unteren Wand (9).

4. Vorrichtung nach einem der Ansprüche 1 bis 3, **dadurch gekennzeichnet, dass** sie außerdem ein elastisches Teil (19, 72) umfasst, das auf dem ersten feststehenden Flansch (1) angeordnet ist, wobei dieses elastische Teil eine schräge Oberfläche (36, 37) aufweist, die geeignet ist für die Steuerung einer mechanischen Hin- und Herbewegung des Einrast-Elements in der Weise, dass eine Rotation des beweglichen Teils (53) in einer Rotationsrichtung nicht möglich (blockiert) ist.

5. Vorrichtung nach einem der Ansprüche 1 bis 4, **dadurch gekennzeichnet, dass** sie den beweglichen Flansch (57) in Form eines Teils mit der allgemeinen Form einer Scheibe umfasst, das versehen ist:
- mit einem durchgehenden Loch, das die Einführung der Welle (53) des beweglichen Teils ermöglicht;
- Einrichtungen, welche die Blockierung der Rotation dieses beweglichen Flansches (57) gegenüber der sich drehenden Welle (53) erlauben,
- wobei dieser bewegliche Flansch (57) außerdem auf einer ersten transversalen Oberfläche (59) mit einem Zapfen (62) ausgestattet ist, der die Schwingachse (41) des Einrastelements (40) bildet.

6. Vorrichtung nach Anspruch 5, **dadurch gekennzeichnet, dass** das Einrastelement (40) oder die bewegliche Ratsche ein im Wesentlichen ebenes Teil ist, das ausgestattet ist mit:
- einem Loch für die Achse, das ihre Montage auf dem Zapfen (62) des beweglichen Flansches (57) erlaubt;
- einem Zapfen (42), der über eine seiner transversalen Oberflächen vorsteht, wobei dieser Zapfen (42) der Ablesezeiger des Nockenbahn (10) bei der Rotation des beweglichen Flansches (57) gegenüber dem feststehenden ersten Flansch (1) bildet;
- Einkerbungen (Zähne) auf mindestens einer ersten Seitenfläche (44), die eine Form haben, die im Wesentlichen komplementär zu denjenigen der Einrast-Rampe (12) des feststehenden ersten Flansches (1) sind.

7. Vorrichtung nach Anspruch 6, **dadurch gekennzeichnet, dass** das Einrast-Element (40) eine Gesamt-Symmetrieebene (S) aufweist, auf deren äußerer Seitenfläche zwei gezahnte Oberflächen (44, 45) angeordnet sind.

8. Vorrichtung nach einem der Ansprüche 1 bis 7, **dadurch gekennzeichnet, dass** sie außerdem ein Träger-Teil (49) für die Achse (5) aufweist, das mit dem beweglichen Flansch (57) mechanisch derart verbunden ist, dass es bei der Bewegung der Welle (53) bei der Rotation von diesem mitgenommen wird, wobei dieses Teil (49) eine elastische Rückholeinrichtung (48) für das Einrast-Element (40) trägt.

9. Vorrichtung nach Anspruch 8, **dadurch gekennzeichnet, dass** die elastische Rückhol-Einrichtung (48) ein flexibles Plättchen ist, das mit einem Anschlag versehen ist, wobei das Einrast-Element mit einem Anschlag (47) mit einer komplementären Form ausgestattet ist, sodass dieses Einrast-Element (40) in den folgenden stabilen Zuständen vorliegen kann:
- in einem ersten Zustand, in dem die gezahnte erste Oberfläche (44) des Einrast-Elements (40) auf der Einrast-Rampe (12) des feststehenden ersten Flansches (1) aufliegt;
- in einem zweiten Zustand, in dem das Einrast-Element (40) mit der Einrast-Rampe (12) nicht in Kontakt steht, wobei dieser Abstand durch die reversible Blockierung des Anschlags (47) gegenüber dem komplementären Profil der elastischen Einrichtung (48) aufrechterhalten wird;
- in einem dritten Zustand, in dem die gezahnte zweite Oberfläche (45) des Einrast-Elements (40) auf der Einrast-Rampe (12) des feststehenden ersten Flansches (1) aufliegt.

10. Vorrichtung nach Anspruch 9, **dadurch gekennzeichnet, dass** sie einen zweiten feststehenden Flansch (65) umfasst, der mit einem durchgehenden Loch versehen ist, das die Einführung der Achse (53) des beweglichen Teils ermöglicht, wobei dieser zweite Flansch (65) mit dem ersten feststehenden Flansch (1) eine Einheit bilden kann, sodass ein Behälter (BO) gebildet wird, in dem das Ganze drehbar gelagert ist, das besteht aus:
- dem beweglichen Flansch (57);
- dem Einrast-Element (40), das sich auf dem beweglichen Flansch (57) gegenüber der Achse (41) hin und her bewegt;
- dem Teil (49), das die elastische Rückhol-Einrichtung (48) trägt.

11. Vorrichtung nach Anspruch 10, **dadurch gekennzeichnet, dass** der zweite feststehende Flansch (65) so auf den ersten feststehenden Flansch (1) angeklemmt ist, dass die Aufrechterhaltung der Drehbewegung des Ganzen gewährleistet ist.

12. Vorrichtung nach Anspruch 10 oder 11, **dadurch gekennzeichnet, dass** die Auflageflächen des ersten feststehenden Flansches (11) nach dem festen Verbinden des ersten feststehenden Flansches (1) mit dem zweiten feststehenden Flansch (65) gewährleisten:
- die erste Auflagefläche (7) die Führung der Achse (5) bei der Rotation und die Blockierung des Trägerteils (49) bei der Translation;
- die zweite Auflagefläche (11) die Auflage mindestens eines Teils einer transversalen Oberfläche des Einrast-Elements (40);
- die dritte Auflagefläche (13) die Führung der Achse (5) bei der Rotation und die Blockierung des beweglichen Flansches (57) bei der Translation.

13. Vorrichtung nach einem der Ansprüche 10 bis 12, **dadurch gekennzeichnet, dass** der bewegliche Flansch (57) umfasst einen von seiner transversalen Oberfläche vorspringenden, gegenüber dem zweiten feststehenden Flansch (65) angeordneten Zapfen (63), der in einer Auflagefläche angeordnet ist, die in dem zweiten feststehenden Flansch (65) vorgesehen ist, wobei dieser Zapfen (63) einen Betätigungsanschlag mindestens eines in der genannten Auflagefläche enthaltenen elastischen Organs bildet.

14. Vorrichtung nach Anspruch 13, **dadurch gekennzeichnet, dass** die Auflagefläche ein ringförmiger Durchgang (64) der Achse (5) ist.

15. Vorrichtung nach Anspruch 13 oder 14, **dadurch gekennzeichnet, dass** die Auflagefläche zwei Federn enthält, wobei die zweite Feder (78) eine höhere Steifheit als die erste Feder (77) aufweist, wobei mindestens eine der Federn mit einer Einrichtung (79) kooperiert, welche die Deformation der ersten Feder (77) auf einen vorgegebenen Grenzwert beschränken kann, sodass die Rotation des beweglichen Flansches (57) diesen Federn (77, 78) entgegenwirkt, um:
- in einem ersten angulären Sektor die erste Feder (77) bis zu dem genannten Grenzwert zusammenzudrücken; und
- dann in einem zweiten angulären Sektor nur die zweite Feder (78) zusammenzudrücken.

16. Vorrichtung nach Anspruch 15, **dadurch gekennzeichnet, dass** die Federn (77, 78) so angeordnet sind, dass sie an einem ihrer Enden mindestens indirekt aufeinanderliegen.

17. Vorrichtung nach Anspruch 15 oder 16, **dadurch gekennzeichnet, dass** die Einrichtung (79) zur Begrenzung der Deformation der ersten Feder (77) ein gebogenes Element ist, dessen ausgezogene (abgewickelte) Länge im Wesentlichen gleich derjenigen der komprimierten ersten Feder (77) ist.

18. Vorrichtung nach einem der Ansprüche 10 bis 17, **dadurch gekennzeichnet, dass** zwischen dem ersten feststehenden Flansch (1) und dem mobilen Flansch (57) eine Einrichtung (82) zur Immobilisierung bei der Rotation vom Trägheits-Typ angeordnet ist.

19. Vorrichtung nach Anspruch 18, **dadurch gekennzeichnet, dass** der erste feststehende Flansch (1) mindestens eine Führungsbahn (83, 84) eines rollenden Organs (82) aufweist, wobei die seitliche Fläche des mobilen Flansches (57) mindestens eine Vertiefung aufweist, die vorgesehen ist für die partielle Aufnahme des rollenden Organs (82) in einer vorgegebenen relativen Orientierung des beweglichen Flansches (57) in Bezug auf den ersten feststehenden Flansch (1 ), sodass es (er) in dieser Position ein Hindernis für die Rotation des beweglichen Flansches (57) darstellt.

20. Verfahren zur Verwendung einer Vorrichtung, wie sie in den vorhergehenden Ansprüchen beschrieben ist, **dadurch gekennzeichnet, dass** es eine Stufe umfasst, in der die Welle (53) in einer ersten Position (P1) festgehalten wird, wobei nur eine Rotation in einer ersten Richtung (S1), ausgehend von dieser Position (P1), möglich ist, und wobei das Einrast-Element (40) in einem ersten Zustand vorliegt, in dem seine Einkerbungen (Zähne) auf der Einrast-Rampe (12) des ersten feststehenden Flansches (1) aufliegen.

21. Verfahren nach Anspruch 20, **dadurch gekennzeichnet, dass** es umfasst mindestens eine Bewegung der Welle (53) in einer ersten Rotationsrichtung (S1) ab einer ersten Position (P1) bis zu einer vorher festgelegten Zwischenposition (P3), die innerhalb eines ersten angulären Sektors liegt, wobei in der Zwischenposition (P3) das Einrast-Element (40) auf den Einkerbungen (Zähnen) der Einrast-Rampe (12) so aufliegt, dass die Bewegung der Welle (53) in der zweiten Rotationsrichtung (S2) blockiert ist.

22. Verfahren nach Anspruch 21, **dadurch gekennzeichnet, dass** es umfasst mindestens eine Bewegung der Welle (53) in der ersten Richtung (S1) ab einer beliebigen Position des ersten angulären Sektors in Richtung auf die vorher festgelegte Position (P3), in der:
- das Einrast-Element (40) im Abstand von der Einrast-Rampe (12) und im Abstand von der Auflage des Anschlags (47) auf einem komplementären Anschlag, der auf dem elastischen Teil (48) vorgesehen ist, gehalten wird;
- der Zapfen (42) in einem Abstand von der Nockenbahn (10) angeordnet ist,
wobei die Rotationsbewegung der Welle (53) in den beiden Rotationsrichtungen (S1, S2), ausgehend von dieser Position (P3), frei ist.

23. Verfahren nach Anspruch 22, **dadurch gekennzeichnet, dass** es umfasst mindestens eine Rotationsbewegung der Welle (53) in der ersten Richtung (S1) ab der vorher festgelegten Position (P3) in Richtung auf eine zweite Position (P2), in der das Einrast-Element (40) auf der Einrast-Rampe (12) aufliegt.

24. Verfahren nach Anspruch 23, **dadurch gekennzeichnet, dass** es umfasst mindestens eine Rotationsbewegung der Welle (53) in der ersten Richtung (S1) ab der zweiten Position (P2) in Richtung auf eine dritte Position (P4), in der:
- das Einrast-Element (40) einen Abstand von der Einrast-Rampe (12) hat und im Abstand gehalten wird durch den Kontakt zwischen dem Anschlag (47) und dem komplementären Anschlag des elastischen Organs (48);
- der Zapfen (42) des Einrast-Elements (40) auf der Nockenbahn (10) aufliegt.

25. Verfahren nach Anspruch 24, **dadurch gekennzeichnet, dass** es umfasst mindestens eine Rotationsbewegung der Welle (53) in der ersten Richtung (S1) ab der dritten Position (P4) bis zu einer Blockage-Position (P5), in der die zweite gezahnte Oberfläche (45) des Einrast-Elements (40) und die Einrast-Rampe (12) aufeinander aufliegen.

26. Anwendung des Verfahrens nach den Ansprüchen 20 bis 25 zur manuellen Einstellung einer Armlehne von Sitzen, insbesondere eines Automobilsitzes.

27. Anwendung nach Anspruch 26, in der
- die erste Position (P1) einer im Wesentlichen horizontalen Stellung der Armlehne entspricht;
- die Positionen, die stufenförmig (Zahn für Zahn) durch Rotation der Welle (53) in dem ersten angulären Sektor, der durch die erste Position (P1) einschließlich und die vorher festgelegte Position (P3) ausschließlich begrenzt ist, einstellbar sind, einer Vielzahl von geneigten Positionen der Armlehne gegenüber der Horizontalen entsprechen, wobei die Blockierung der Bewegung in der Richtung (S2) eine Auflage auf dieser Armlehne in diesen Positionen erlaubt;
- die zweite Position (P2) einer im Wesentlichen vertikalen Stellung der Armlehne entspricht; und
- die dritte Position (P4) und die Blockage-Position (P5) schräge Stellungen mit einem etwas größeren Winkel als 90 ° gegenüber der Position (P1) entsprechen.

## Claims

1. A device for automatic indexed guidance of a moving part (53) guided about an axis of rotation (5) on a fixed part (1) that is fixed about said axis of rotation (5), the device comprising:
· a toothed element (40) mounted,to rock about a rocking axis (41) substantially parallel to the axis of rotation (5);
· a ratchet (12) defining a plurality of abutments for the toothed element (40), said abutments being angularly disposed around the axis of rotation (5); and
· a cam path (10) for controlling the rocking movements of the toothed element (40) about its rocking axis (41) during rotation of the moving part;
said device being **characterized in that** it comprises a first rigid one-piece fixed cheek-plate (1) provided with a plurality of staged surfaces defining:
· the ratchet (12);
· the cam path (10); and
· at least one bearing surface (13, 14) suitable for guiding a moving plate (57) in rotation about the axis of rotation (5), the moving plate supporting the rocking axis (41) of the toothed element (40).

2. A device according to claim 1, **characterized in that** the first fixed cheek-plate (1) has a through hole (4) about the axis (5) enabling at least a portion of the shaft (53) of the moving part to pass therethrough, the first fixed cheek-plate (1) also having, starting from the axis (5) and going radially towards the outline (2) of the cheek-plate (1):
· a first bearing surface (7) formed by a substantially transverse annular surface inwardly defined by the cylindrical edge (6) of the hole (4) and outwardly defined by a cylindrical edge (8) about the axis (5);
· a substantially transverse wall forming the cheek wall (9) of the first fixed cheek-plate (1);
· a cam path (10) formed by a surface extending substantially perpendicularly to the cheek wall (9);
· a second substantially transverse bearing surface (11) inwardly defined by the cam path (10) and outwardly defined by a toothed ratchet (12) that is annular about the axis (5):
· a third substantially transverse bearing surface (13) inwardly defined by the ratchet (12) and outwardly defined by an annular wall (14) about the axis (5); and
· a fourth substantially transverse bearing surface (15) inwardly defined by the annular wall (14) and outwardly defined by the outline (2).

3. A device according to claim 2, **characterized in that** the cam path (10) comprises two half cam paths that are substantially symmetrical about a plane (T) perpendicular to the cheek wall (9).

4. A device according to any one of claim 1 to 3, **characterized in that** it further includes a resilient part (19, 72) mounted on the first fixed cheek-plate (1), said resilient part including an inclining surface (36, 37) suitable for causing the toothed element to rock so as to prevent the moving part (53) from turning in one direction of rotation.

5. A device according to any one of claims 1 to 4, **characterized in that** it includes said moving plate (57) in the form of a generally disk-shaped part provided:
· with a through hole through which the shaft (53) of the moving part passes; and
· means enabling the moving plate (57) to be prevented from rotating relative to said rotary shaft (53);
the moving plate (57) being also provided on a first transverse face (59) with a stud (62) defining the rocking axis (41) of the toothed element (40).

6. A device according to claim 5, **characterized in that** the toothed element (40) or rocking pawl is a substantially plane part provided with:
· an axial hole enabling it to be mounted on the stud (62) of the moving plate (57);
· a stud (42) projecting from one of its transverse faces, said stud (42) forming a cam-follower finger for reading the cam path (10) during rotation of the moving plate (57) relative to the first fixed cheek-plate (1); and
· teeth over at least a first side surface (44), said teeth being substantially complementary in shape to the teeth of the ratchet (12) of the first fixed cheek-plate (1).

7. A device according to claim 6, **characterized in that** the toothed element (40) is provided with an overall plane of symmetry (S), having two toothed surfaces (44, 45) disposed on its outer side surface.

8. A device according to any one of claims 1 to 7, **characterized in that** it further includes a support part (49) about the axis (5), the support part being mechanically linked to the moving plate (57) so as to be rotated together therewith during movement of the shaft (53), said part (49) supporting resilient return means (48) for the toothed element (40).

9. A device according to claim 8, **characterized in that** the resilient return means (48) is a flexible blade provided with an abutment, the toothed element being provided with an abutment (47) of complementary shape such that said toothed element (40) can occupy the following stable states:
· a first state in which the first toothed surface (44) of the toothed element (40) bears against the ratchet (12) of the first fixed cheek-plate (1);
· a second state in which the toothed element (40) is not in contact with the ratchet (12), said spacing apart being conserved by reversible locking of the abutment (47) against the complementary profile of the resilient means (48); and
· a third state in which the second toothed surface (45) of the toothed element (40) bears against the ratchet (12) of the first fixed cheek-plate (1).

10. A device according to claim 9, **characterized in that** it comprises a second fixed cheek-plate (65) provided with a through hole enabling the shaft (53) of the moving part to pass therethrough, said second cheek-plate (65) being suitable for being secured to the first fixed cheek-plate (1) so as to form a box (BO) in which there is housed the rotary assembly constituted by:
· the moving plate (57);
· the toothed element (40) that rocks on the moving plate (57) about the axis (41); and
· the support part (49) for supporting the resilient return means (48).

11. A device according to claim 10, **characterized in that** the second fixed cheek-plate (65) is snap-fastened onto the first fixed cheek-plate (1) so as to retain said rotary assembly.

12. A device according to claim 10 or 11, **characterized in that**, after the first and second fixed cheek-plates (1, 65) have been fixed together, the bearing surfaces of the first fixed cheek-plate (1) serve as follows:
· for the first bearing surface (7) to guide the support part (49) in rotation about the axis (5) and to prevent it from moving in translation;
· for the second bearing surface (11) to bear against at least a portion of a transverse surface of the toothed element (40); and
· for the third bearing surface (13) to guide the moving plate (57) in rotation about the axis (5) and to prevent it from moving in translation.

13. A device according to any one of claims 10 to 12, **characterized in that** the moving plate (57) comprises a stud (63) projecting from its transverse face placed facing the second fixed cheek-plate (65), the stud being received in a holding bearing surface formed in the second fixed cheek-plate (65), the stud (63) constituting an abutment for actuating at least one resilient member contained in said bearing surface.

14. A device according to claim 13, **characterized in that** the holding bearing surface is an annular groove (64) about the axis (5).

15. A device according to claim 13 or 14, **characterized in that** the holding bearing surface contains two springs, the second spring (78) being stiffer than the first spring (77), at least one of the springs co-operating with means (79) suitable for limiting deformation of the first spring (77) to a predetermined limit value so that rotation of the moving plate (57) takes place against said springs (77, 78) in such a manner that:
· over a first angular sector the first spring (77) is compressed up to said limit value; and
· thereafter, over a second angular sector, only the second spring (78) is compressed.

16. A device according to claim 15, **characterized in that** the springs (77, 78) are disposed to bear at least indirectly against each other via respective ends.

17. A device according to claim 15 or 16, **characterized in that** the means (79) suitable for limiting deformation of the first spring (77) is an arcuate element of developed length substantially equal to the length of the first spring (77) when compressed.

18. A device according to any one of claims 10 to 17, **characterized in that** inertial type means (82) for preventing rotation are interposed between the first fixed cheek-plate (1) and the moving plate (57).

19. A device according to claim 18, **characterized in that** the first fixed cheek-plate (1) has at least one guide track (83, 84) for a rolling member (82), the side face of the moving plate (57) having at least one cavity disposed so that in a determined relative orientation of the moving plate (57) relative to the first fixed cheek-plate (1) it receives the rolling member (82) in part so as to constitute, in this position, an obstacle to rotation of the moving plate (57).

20. A method of implementing a device as presented in the preceding claims, **characterized in that** it comprises a step in which the shaft (53) is held fixed in a first position (P1), rotation in a first direction (S1) only being possible from said position (P1), the toothed element (40) being in a first bearing state for its teeth bearing against the ratchet (12) of the first fixed cheek-plate (1).

21. A method according to claim 20, **characterized in that** it comprises at least one movement of the shaft (53) in a first direction of rotation (S1) from the first position (P1) to an intermediate predetermined position (P3) contained in a first angular sector, in which intermediate position the toothed element (40) bears against the teeth of the ratchet (12) so that movement of the shaft (53) in the second direction of rotation (S2) is prevented.

22. A method according to claim 21, **characterized in that** it comprises at least one movement of the shaft (53) in the first direction (S1) from any position of the first angular sector towards said predefined position (P3) in which:
· the toothed element (40) is spaced apart from the ratchet (12) and is held apart by the abutment (47) bearing against a complementary abutment provided on the resilient part (48); and
· the stud (42) is placed at a distance from the cam path (10);
rotary movement of the shaft (53) in both directions of rotation (S1, S2) being free from said position (P3).

23. A method according to claim 22, **characterized in that** it comprises at least one rotary movement of the shaft (53) in the first direction (S1) from said position (P3) towards a second position (P2) in which the toothed element (40) bears against the ratchet (12).

24. A method according to claim 23, **characterized in that** it comprises at least one rotary movement of the shaft (53) in the first direction (S1) from the second position (P2) to a third position (P4) in which:
· the toothed element (40) is at a distance from the ratchet (12) and is held apart by contact between the abutment (47) and the complementary abutment of the resilient member (48); and
· the stud (42) of the toothed element (40) bears against the cam path (10).

25. A method according to claim 24, **characterized in that** it comprises at least a rotary movement of the shaft (53) in the first direction (S1) from the third position (P4) to a locking position (P5) in which the second toothed surface (45) of the toothed element (40) bears against the ratchet (12).

26. The use of a method as presented in claims 20 to 25 to manually adjusting a seat armrest, in particular of a motor vehicle seat.

27. A use according to claim 26, in which:
· the first position (P1) corresponds to the armrest being in a substantially horizontal situation;
· the positions which are adjustable tooth by tooth by rotating the shaft (53) over the first angular sector defined by said first position (P1) included and the said predetermined position (P3) excluded, correspond to a plurality of positions in which the armrest is inclined relative to the horizontal, prevention of movement in the direction (S2) enabling the armrest to be leant on in such positions;
· the second position (P2) corresponds to the armrest being in a substantially vertical situation; and
· the third position (P4) and the locking position (P5) corresponding to situations in which the armrest is inclined at an angle of slightly more than 90° relative to the position (P1).
